(19) Europäisches Patentamt
European Patent Office
Office européen des brevets

(11) **EP 2 007 493 B1**

(12) **EUROPÄISCHE PATENTSCHRIFT**

(45) Veröffentlichungstag und Bekanntmachung des Hinweises auf die Patenterteilung:
**29.06.2016   Patentblatt 2016/26**

(51) Int Cl.:
*B82Y 30/00* (2011.01)          *B01D 9/00* (2006.01)
*C01G 1/00* (2006.01)          *C01G 51/00* (2006.01)
*C01G 53/00* (2006.01)          *H01M 4/04* (2006.01)
*H01M 4/525* (2010.01)          *H01M 4/90* (2006.01)

(21) Anmeldenummer: **07727130.2**

(22) Anmeldetag: **20.03.2007**

(86) Internationale Anmeldenummer:
**PCT/EP2007/052653**

(87) Internationale Veröffentlichungsnummer:
**WO 2007/113102 (11.10.2007 Gazette 2007/41)**

(54) **VORRICHTUNG UND VERFAHREN ZUR HERSTELLUNG VON VERBINDUNGEN DURCH FÄLLUNG**

DEVICE AND METHOD FOR THE PRODUCTION OF COMPOUNDS BY PRECIPITATION

DISPOSITIF ET PROCÉDÉ DE PRODUCTION DE COMPOSÉS PAR PRÉCIPITATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.03.2006   DE 102006015538**

(43) Veröffentlichungstag der Anmeldung:
**31.12.2008   Patentblatt 2009/01**

(60) Teilanmeldung:
**11005628.0 / 2 386 339**

(73) Patentinhaber: **H.C. Starck GmbH**
**38642 Goslar (DE)**

(72) Erfinder:
  • **OLBRICH, Armin**
    **38723 Seesen (DE)**
  • **MEESE-MARKTSCHEFFEL, Juliane**
    **38642 Goslar (DE)**
  • **JAHN, Matthias**
    **38642 Goslar (DE)**

  • **ZERTANI, Rüdiger**
    **38642 Goslar (DE)**
  • **MAIKOWSKE, Gerd**
    **38640 Goslar (DE)**
  • **ALBRECHT, Sven**
    **38642 Goslar (DE)**
  • **MALCUS, Stefan**
    **38642 Goslar (DE)**
  • **SCHMOLL, Josef**
    **38642 Goslar (DE)**
  • **KRUFT, Michael**
    **Brights Grove, Ontario N0N 1C0 (CA)**

(56) Entgegenhaltungen:
| | |
|---|---|
| EP-A- 0 031 395 | EP-A- 1 547 977 |
| EP-A- 1 637 503 | WO-A-2004/032260 |
| DE-A1- 1 809 755 | DE-A1- 3 725 943 |
| DE-C2- 3 501 294 | GB-A- 1 418 203 |
| US-A- 3 399 135 | US-A- 4 735 872 |
| US-A1- 2004 110 066 | |

**Beschreibung**

Die vorliegende Erfindung betrifft eine Vorrichtung und ein Verfahren zur Herstellung von Verbindungen durch Fällung von Feststoffen aus Lösungen, wobei die physikalischen und chemischen Eigenschaften der sich bei der Fällung bildenden Partikel des Feststoffes sehr flexibel und unabhängig voneinander eingestellt werden können und somit maßgeschneiderte Produkte mit sehr hoher Raum-Zeit-Ausbeute hergestellt werden.

Viele technisch wichtige Festkörperverbindungen werden durch Fällung aus Lösungen hergestellt, wobei als Lösungsmittel Wasser, organische Verbindungen, und/oder deren Mischungen in Frage kommen. Dies kann beispielsweise durch schnelle Abkühlung, plötzliche Herabsetzung der Löslichkeit der auszufällenden Verbindung, durch Zumischung eines weiteren Lösungsmittels, in dem die Verbindung schwerer löslich ist, oder durch chemische Reaktion, bei der die im Lösungsmittel schwerlösliche Verbindung überhaupt erst entsteht, erreicht werden. Die bei der Fällung durch homogene Keimbildung neu entstehende feste Phase besteht aus vielen kleinen Primärkristalliten, die durch Agglomeration Sekundärpartikel bilden oder sich an bereits vorhandene Sekundärpartikel anlagern.

An die Beschaffenheit der Primär- und Sekundärpartikel werden in der Regel genau definierte Anforderungen gestellt, um gewünschte Anwendungseigenschaften zu erzielen. Die Eigenschaften der Primärkristallite und der aus ihnen gebildeten Agglomerate hängen naturgemäß von den Prozessparametern ab. Die Anzahl der relevanten Prozessparameter kann unter Umständen relativ groß sein. Zu den chemisch-physikalischen Prozessparametern gehören beispielsweise Temperatur, Konzentrationen der Eduktlösungen, Konzentration von überschüssigem Fällungsreagenz in der Mutterlauge, Konzentration von Katalysatoren, pH-Wert, Ionenstärke etc. Die wichtigsten, mehr verfahrenstechnischen Anlagenparameter sind Verweilzeit, Feststoffkonzentration, mechanischer Energieeintrag, Reaktorgeometrie, Art der Durchmischung mit Rührern verschiedenen Typs oder Pumpen. Zu den grundlegenden verfahrenstechnischen Einstellungen gehört natürlich auch die Auswahl einer Batch- oder einer kontinuierlichen Arbeitsweise. Kontinuierliche Fällprozesse erlauben eine gleichmäßige Produktherstellung. Für die Prozessparameter existieren naturgemäß gewisse Bereiche, innerhalb derer sie eingestellt werden können. So haben die Edukte in den Eduktlösungen eine maximale Löslichkeit, die nicht überschritten werden kann. Daraus ergibt sich dann die maximal mögliche Feststoffkonzentration in der Produktsuspension. Diese kann aber beispielsweise auch durch die Löslichkeitsgrenze von eventuell bei der Fällungsreaktion entstehendem Neutralsalz in der Mutterlauge begrenzt sein. Andererseits kann es notwendig sein, mit Neutralsalzkonzentrationen zu arbeiten, die geringer sind als die sich natürlich aus den Eduktkonzentration ergebenden.

Oft tritt das Problem auf, daß die Einstellung der Prozessparameter, die die Eigenschaften der Primärpartikel beeinflusst, nicht optimal oder sogar kontraproduktiv für die gewünschten Eigenschaften der Sekundärpartikel ist. Die Kunst besteht dann darin, eine Einstellung der Prozessparameter zu finden, die zu einem tragfähigen Kompromiss für die Eigenschaften der Primär- und Sekundärpartikel führt.

Es existieren also eine Reihe von Nebenbedingungen, die die definierte Einstellung von Produkteigenschaften erschweren. Darüber hinaus sind manche Produkteigenschaften wie z. B. spezifische Oberfläche, Porosität, Klopfdichte, Schüttgewicht, Korngrößenverteilung, Fließfähigkeit, Kristallitgröße etc. nicht zu erzielen, obwohl dies ohne die bestehenden Einschränkungen oft möglich erscheint. Man beobachtet beispielsweise bei einigen Metallhydroxiden, daß die spezifische Oberfläche bei den vorliegenden Reaktionsbedingungen streng monoton mit steigendem Feststoffgehalt fällt, kann aber den extrapolierten Feststoffgehalt für die gewünschte spezifische Oberfläche nicht einstellen, da er oberhalb des sich auf natürlicherweise ergebenden Feststoffgehaltes liegt.

Für moderne wiederaufladbare Hochleistungsbatterien bilden reine oder gemischte Übergangsmetallhydroxide, die in der Regel über Fällungsprozesse hergestellt werden, nur um ein Beispiel zu nennen, wichtige Komponenten oder Vorstoffe.
So stellt zum Beispiel mit Cobalt und Zink dotiertes Nickelhydroxid die aktive Komponente der positiven Elektrode in Nickel-Metall-Hydrid bzw. Nickel-Cadmium-Akkumulatoren dar (Z. Kristallogr. 220 (2005) 306-315). Für die bekannten Nickel-Metall-Hydrid-Batterien, beispielsweise, werden heutzutage in der Regel auf Schaumtechnologie beruhende Elektroden genutzt, die den Einsatz des positiven Aktivmaterials in Form sphäroidischer Partikel erfordern.

Ebenfalls sphäroidische Partikel kommen bei den immer wichtiger werdenden wiederaufladbaren Lithium-Ionen/Polymer-Batterien zum Einsatz. Seit geraumer Zeit wird - hauptsächlich aus wirtschaftlichen Gründen - weltweit versucht, das bisher in den Lithium-Ionen/Polymer-Akkumulatoren enthaltene teure Cobalt (in Form von $LiCoO_2$) teilweise oder sogar ganz zu substituieren. Zu diesem Zweck werden u. a. Verbindungen der Metalle Ni, Mn und Al - wie z. B. $Li(Ni,Co,Mn)O_2$ oder $Li(Ni,Co,Al)O_2$ - intensiv untersucht. Der erste Schritt besteht hier in der Herstellung entsprechender sphärischer hydroxidischer Vorstoffe, die durch Co-Fällung synthetisiert, gegebenenfalls im Anschluss auch noch beschichtet werden, um dann über thermische Behandlung unter Zugabe einer Lithium-Komponente in das jeweilige oxidische Endprodukt umgewandelt zu werden.

Je nach Batterietyp, Hersteller und Anwendung des Akkumulators kommen heute die unterschiedlichsten Materialkompositionen zum Einsatz, und der Hersteller der sphärischen Hydroxide selbst sieht sich mit einer ganzen Palette unterschiedlichster Spezifikationen konfrontiert, die darüber hinaus in sich oftmals sehr enge Toleranzgrenzen für chemische und insbesondere die physikalischen Eigenschaften aufweisen.

Es ist offensichtlich, daß man diesem Problem - um überhaupt einigermaßen wirtschaftlich produzieren zu können - nicht mit einer beträchtlichen Anzahl verschiedener Produktionsanlagen, sondern nur mit einer sehr flexiblen, auf die jeweiligen Anforderungen einstellbaren, aber sehr stabil und definiert arbeitenden Anlage und Technologie begegnen kann. In der Regel sind in den Spezifikationen alle wesentlichen chemischen und natürlich insbesondere physikalischen Eigenschaften, wie z. B. Partikelgrößenverteilung, Klopfdichte, spezifische Oberfläche und mikrokristalliner Verbund (Kristallitgröße) genau vorgegeben. Alle diese Stoffeigenschaften hängen von einer ganzen Reihe von Prozeßparametern ab (wie z.B. Edukt-, Neutralsalz- und Feststoffkonzentrationen, Verweilzeit, Temperatur, Energieeintrag, usw.), und diese wirken naturgemäß nicht unbedingt gleichsinnig auf die vorgegebenen Produkteigenschaften. Daher ist es eine besondere Herausforderung bestimmte Eigenschaftskombinationen z.B. der hydroxidischen Vorstoffe realisieren zu können - und dies im Hinblick auf die geforderte Wirtschaftlichkeit - möglichst in einem einzigen, universell zu justierendem Anlagensystem.

Zwar ist es z. B. aus physikalischen Gründen nicht möglich, gleichzeitig die Porosität und die Klopfdichte eines sphäroidischen Materials zu maximieren, da diese beiden Eigenschaften gegenläufig sind. Es existiert jedoch eine Reihe von Abhängigkeiten zwischen einzelnen Produkteigenschaften, die innerhalb gewisser Grenzen verschiebbar sind. Die Kunst besteht nun darin, die verschiedenen Kombinationen der Anlagenparameter zu finden und praktisch mit möglichst einer Anlagentechnologie zu verwirklichen, die eine wenigstens teilweise unabhängige Einstellung der für die Batterieperformance wichtigen physikalischen Produkteigenschaften der hydroxidischen Batterievorstoffe erlaubt.

In JP Hei 4-68249 wird die kontinuierliche Herstellung von sphärischem Nickelhydroxid beschrieben. Dabei werden einem beheizten Ruhrkessel mit Überlauf kontinuierlich eine Nickelsalzlösung, Alkalilauge und wässrige Ammoniaklösung hinzugefügt. Nach 10 bis 30 Stunden wird der stationäre Zustand im Reaktorsystem erreicht, wonach kontinuierlich ein Produkt mit konstanter Qualität ausgetragen werden kann. Die mittlere Verweilzeit im Reaktor dauert 0,5 bis 5 Stunden. Bei diesem Verfahren sind die Feststoffkonzentration in der Suspension und die Neutralsalzkonzentration in der Mutterlauge über die Stöchiometrie der Fällungsreaktion zwangsläufig gekoppelt. Darüber hinaus bestimmt die temperaturabhängige Löslichkeitsgrenze des bei der Reaktion entstehenden Neutralsalzes die maximal erreichbare Feststoffkonzentration in der Suspension. Die Erreichung von der Neutralsalzkonzentration unabhängigen oder sehr hohen Feststoffkonzentrationen in der Suspension, z.B. um das Vielfache sind naturgemäß bei einen Verfahren gemäß JP Hei 4-68249 nicht möglich.

EP 0658514 B1 offenbart die kontinuierliche Fällung von Metallhydroxiden durch Zersetzung der Aminkomplexe in Gegenwart von Laugen in einem Treibstrahlreaktor. Hierbei werden die Edukte im Gegensatz zum Rührreaktor durch den austretenden Strahl einer Düse mit dem Reaktionsmedium vermischt. Die in JP Hei 4-68249 beschriebenen Einschränkungen hinsichtlich der Erhöhung der Feststoffkonzentration in der Suspension gelten ebenso für das Verfahren, welches in EP 0658514 B1 beschrieben ist.

Die Schrift US 4 735 872 A beschreibt eine Vorrichtung und ein Verfahren zur Aufarbeitung von verbrauchten Elektrolytlösungen, insbesondere aus Aluminium-Luft Batterien, durch Kristallisation. Die offenbarte Vorrichtung umfasst einen Reaktor mit einem parallele Lamellen enthaltenden Schrägklärer, dessen Eintrittsfläche derart am Reaktor angeordnet ist, dass im Schrägklärer anfallendes Sediment nur in den Reaktor zurückrutschen kann, eine Pumpe und einen Umlaufbehälter derart ausgestaltet, dass der Oberlauf des Schrägklärers durch die Pumpe gefördert in den Umlaufbehälter gelangt, von wo eine mit eine Abzweigung zur Trübeentnahme aufweisende Leitung zurück in den Reaktor führt.

US 2003/0054252 A1 beschreibt Aktivmaterialien für Lithiumbatterien, sowie deren Herstellung. Zur Fällung der Vorstoffverbindungen wird ein batchweise betriebener Apparat empfohlen, der eine äußere Zirkulation von klarer Mutterlauge aufweist, die aus dem oberen Bereich des Reaktors abgepumpt und seitlich in ein Fallrohr eingeleitet wird, durch das sie von unten wieder in den Reaktor zurückströmt. Durch diese Aufwärtsströmung wird verhindert, dass zu kleine Teilchen durch das Fallrohr in das Auffanggefäß für das Fertigprodukt gelangen können. In dieses Auffanggefäß können nur die Teilchen absinken, die eine gewisse Mindestgröße erreicht haben. Das in US 2003/005452 beschriebene Verfahren zur Herstellung von Vorstoffen durch Fällung, ermöglicht keine voneinander unabhängige Einstellung der Prozessparameter. Ein direkter Eingriff in die Entwicklung der Korngrößenverteilung durch einen definierten Austrag einer Feinkomfraktion aus der Suspension ist mit diesem Verfahren nicht möglich.

Die Aufgabe der vorliegenden Erfindung war es daher, eine Vorrichtung und ein Verfahren bereit zu stellen, mit denen die Bereiche der einzelnen Prozessparameter z.B. (Konzentration der Edukte, Feststoffgehalt in der Suspension, Salzkonzentration in der Mutterlauge) unabhängig voneinander eingestellt werden können und somit durch die Erweiterung bestehender und Schaffung neuer Freiheitsgrade eine maximale Flexibilität des Verfahrens zur Herstellung von Festkörperverbindungen durch Fällung aus Lösungen zu erreichen. Die Aufgabe der vorliegenden Erfindung war auch eine Vorrichtung und ein Verfahren bereitzustellen, welche einen kontrollierten Eingriff in die Entwicklung der Partikelgrößenverteilung während des Fällprozesses erlauben. Eine weitere Aufgabe der vorliegenden Erfindung bestand auch darin eine Vorrichtung und ein Verfahren zur Verfügung zu stellen, die es ermöglichen, die nach dem Stand der Technik maximal erreichbare Feststoffkonzentration auf ein Vielfaches zu erhöhen.

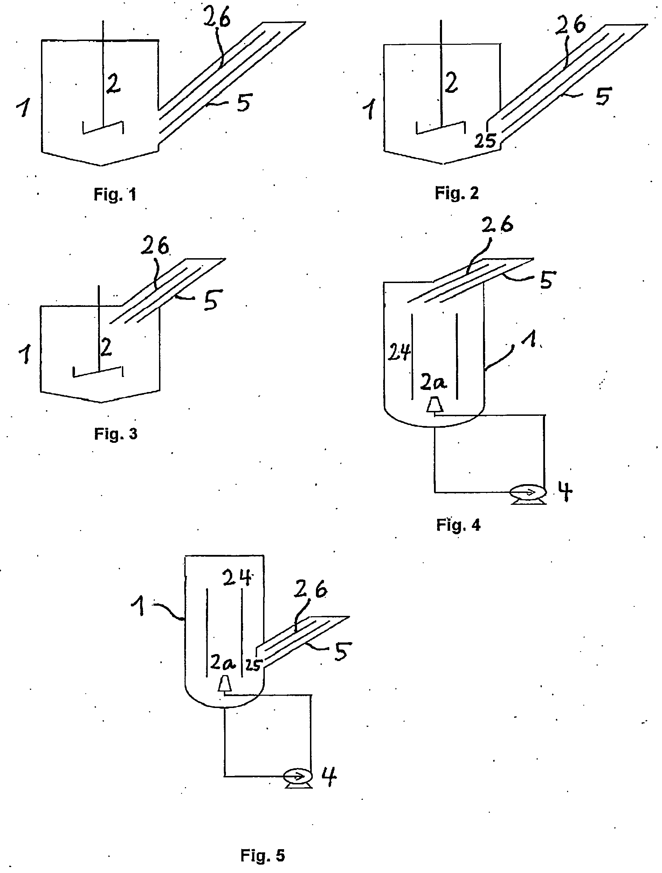

Die Aufgabe wird gelöst durch eine Vorrichtung gemäß Anspruch 1, die Verwendung dieser Vorrichtung und ein Verfahren gemäß Ansprüchen 7 und 8. Durch den Einsatz eines Rührreaktors mit integriertem Schrägklärer, im Folgenden "Integriertes Reaktor-Klärer-System (IRKS)" genannt (dargestellt in Figs. 1-3, 10, 11; Figs. 4, 5 und 12 sind nicht erfindungsgemäß) als zentrale Einheit in Verbindung mit weiteren Apparaten (z.B. Filter, Behälter, Pumpen etc.), wobei nach der Fällung von Verbindungen unter Bildung von Produktsuspension, bestehend aus Produkt und Mutterlauge, über den Schrägklärer Mutterlauge und Partikel abgezogen und entweder als Trübe ausgeschleust oder ungefiltert oder gefiltert in den Rührreaktor zurückgeführt werden, kann kontrolliert die Partikelgrößenverteilung eingestellt und eine Erhöhung der Feststoffkonzentration um ein Vielfaches erreicht werden.

Der Reaktor kann eine zylinderförmige, oder quaderförmige Vorrichtung sein, Fig. 1 bis **5** (1), mit einem ebenen oder gewölbten oder konisch ausgebildeten Boden. Der Boden des Reaktors kann mit einer Öffnung versehen sein, über die gegebenenfalls mit Hilfe einer Pumpe Suspension abgezogen und in den Reaktor zurückgepumpt werden kann, Fig. 4, 5, **10, 11 und 12** (44). Um ein homogenes Fällprodukt zu erhalten, ist es wichtig, dass die Edukte beim Eintritt in den Reaktor gut gemischt werden. Im Rührreaktors werden üblicherweise Scheibenrührer, Propellerrührer, Schrägblattrührer, INTERMIG®-Rührer oder andere, dem speziellen Rührproblem angepasste Rührer verwendet. Auswahl, Anordnung und Dimensionierung eines geeigneten Rührers werden z.B. beschrieben bei Zlokarnik, Rührtechnik, Theorie und Praxis, Springerverlag 1999.

Die Auslegung des Rührreaktors beeinflusst entscheidend die Partikelgröße und die Partikelgrößenverteilung, sowie das Absetzverhalten der Partikel im Reaktor. Die Fällprozesse im IRKS können in Abhängigkeit vom Produkt sowohl bei Zimmertemperatur als auch bei tieferen oder höheren Temperaturen durchgeführt werden. Die Temperaturen während des Fällprozesses im IRKS können daher - 20°C bis 100°C betragen.

Bevorzugt werden die Fällprozesse bei Temperaturen von 20 bis 90°C und besonders bevorzugt bei Temperaturen von 30 bis 70°C durchgeführt. Besonders gute Ergebnisse bei der Herstellung von z.B. Batterievorstoffen, solcher wie Nickeloxide, Nickelhydroxide, Ni,Co-Mischoxide bzw. Ni,Co-Mischhydroxide werden bei Temperaturen im Bereich von 30 bis 70°C erreicht. Die Prozesstemperaturen werden, falls erforderlich, über einen Wärmetauscher **(3)** durch Heizung bzw. Kühlung eingestellt und geregelt, Fig. 10 und Fig. 11. Wenn mit externer Zirkulation gearbeitet wird, kann der Wärmetauscher **(3)** auch in dieser eingebaut werden, Fig. 12.

Der Schrägklärer **(5)** kann sich an einer beliebigen Stelle des Reaktors befinden, beispielsweise oben auf dem Reaktor aufgesetzt sein, **wie in** Fig. 3 **4 und 11 dargestellt.** Um die Bauhöhe zu verringern, kann der Schrägklärer auch vorteilhaft unten am Reaktor angebracht sein, **wie In** Fig. 1, 2, 5, **10 und 12 zu sehen ist.** Das IRKS wird zur Fällung von chemischen Verbindungen aus Lösungen eingesetzt. Im Schrägklärer wird die Mutterlauge zusammen mit einer definierten Feinkornfraktion des Feststoffes von der Produktsuspension getrennt. Diese wenige g/l feststoffenthaltende trübe Flüssigkeit wird größtenteils in den Reaktor zurückgeführt und wieder mit der Produktsuspension vereinigt. Durch Entnahme eines Teils dieser trüben Flüssigkeit wird der Produktsuspension Feinanteil entzogen und die Partikelgrößenverteilung zu höheren $D_{50}$ - Werten verschoben. Ein weiterer Zweck des Schrägklärers besteht darin, eine vorgeklärte, nur wenig Feststoff enthaltende Flüssigkeit bereitzustellen, aus der auf einfache Weise klare Mutterlauge durch Filtration abgetrennt werden kann.

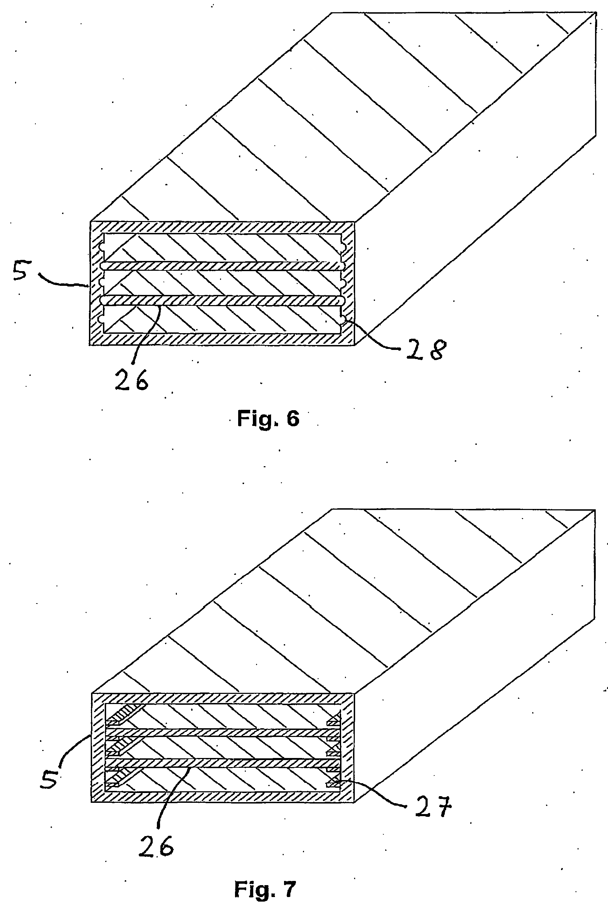

Um die Trennleistung des Schrägklärers zu erhöhen, sind mehrere Lamellen (26), **wie in Fig. 1 bis 8 und 10 bis 12 4**, eingebaut auf denen Feststoffpartikel, nachdem sie durch Sedimentation die Oberfläche der Lamellen erreicht haben, nach unten in die homogen durchmischte Suspension zurückrutschen. Die Lamellen sind in dem Schrägklärer planparallel zur dessen Bodenfläche angeordnet. Die Lamellen stellen rechteckige Platten dar, die aus Kunststoff, Glas, Holz, Metall oder Keramik bestehen können. Die Dicke der Lamellen kann in Abhängigkeit vom Material und Produkt bis zu 10 cm betragen. Bevorzugt werden Lamellen mit eine Dicke von 0,5 bis 5 cm, besonders bevorzugt von 0,5 bis 1,5 cm eingesetzt. Die Lamellen **(26)** werden im Schrägklärer fest eingebaut. Sie können auch abnehmbar sein, wie in Fig. 6 und Fig. 7. In diesem Fall werden sie über das auf den Innenseiten des Schrägklärers seitlich angebrachten Schienensystems **(27) in** Fig. 7, oder Nuten **(28),** in Fig. 6 in den Schrägklärer **(5)** eingeschoben. Das Schienensystem kann auch höhenverstellbar ausgebaut sein, wodurch dem Schrägklärer große Flexibilität im Bezug auf die Wahl der Lamellenabstände verliehen wird. Der Schrägklärer kann zylinderförmig mit einem runden Querschnitt oder quaderförmig, mit einem viereckigen Querschnitt ausgeführt sein, Fig. 6 und Fig. 7. Damit das Zurückrutschen der Partikel ohne Verstopfung des Schrägkläres funktioniert, beträgt der Winkel des Schrägklärers gegen die Horizontale 20 bis 85°, vorzugsweise 40 bis 70° und besonders bevorzugt 50 bis 60°. Der Schrägklärer kann auch über eine flexible Verbindung am Reaktor angebracht sein. Bei dieser Ausführung kann der Winkel während des Prozesses variabel eingestellt werden.

In einer bevorzugten Ausführung enthält der Schrägklärer am Einlauf im inneren des Reaktors eine Platte **(25),** Fig. 2, 5, **10 und 12,** die planparallel zur Öffnung der Eintrittsfläche des Schrägklärers angeordnet ist. Diese Platte verhindert, dass der Schrägklärer im Einlaufbereich durch hochkonzentrierte Suspension verstopfen kann.

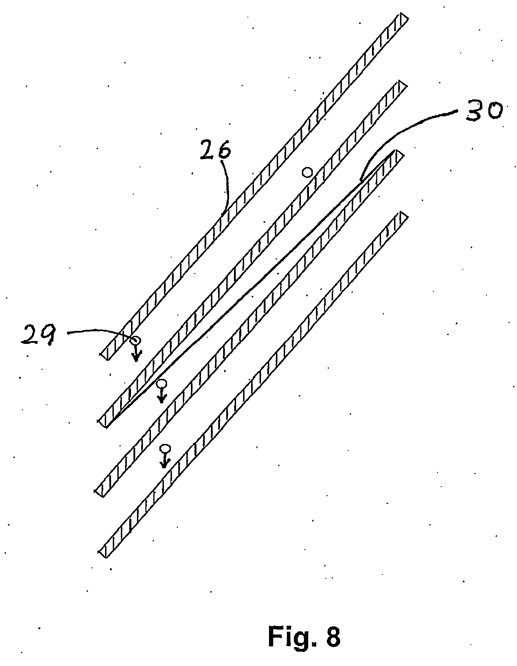

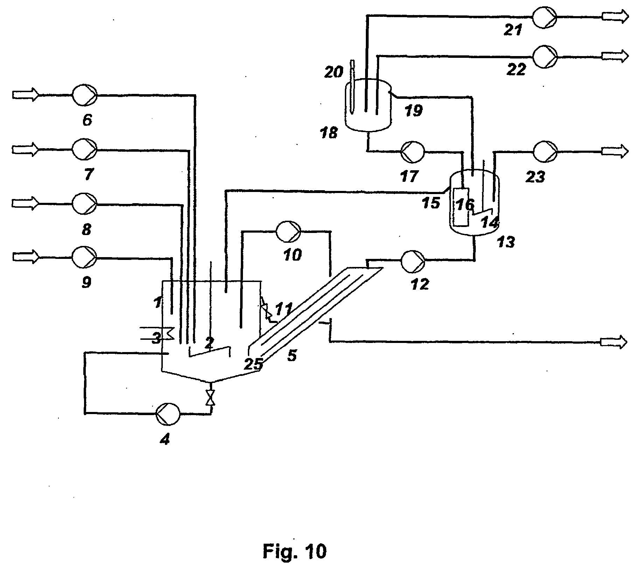

Um die Funktionsweise des IRKS besser zu verstehen, wird nachstehend eine detaillierte Erläuterung anhand der Fig. 8 angeführt: Die Feststoffpartikel (29) sinken im Schrägklärer Fig. 8 in Abhängigkeit von ihrer Form und Größe mit konstanter Geschwindigkeit nach unten. Setzt man beispielsweise Stokes-Reibung voraus, so ist die durch die effektive Gewichtskraft hervorgerufene Sinkgeschwindigkeit für kugelförmige Partikel proportional dem Quadrat des Partikeldurchmessers. Diese Geschwindigkeit ist nun von der Aufwärtskomponente der Geschwindigkeit der laminaren Strömung im Schrägklärer überlagert. Alle Feststoffpartikel, deren Sinkgeschwindigkeit vom Betrag her kleiner oder gleich ist, als die Aufwärtskomponente der Flüssigkeitsströmung können nicht bis auf die Oberfläche einer Lamelle (26) oder der Bodenfläche des Schrägklärers absinken und werden folglich mit dem Oberlauf des Schrägklärers ausgetragen. Ist die Sinkgeschwindigkeit der Partikel vom Betrage größer als die Aufwärtskomponente der Flüssigkeitsströmung, setzt eine Abwärtsbewegung der Partikel mit einer konstanten Sinkgeschwindigkeit ein. Ob solch ein Partikel mit dem Oberlauf aus dem Schrägklärer ausgetragen wird oder nicht, hängt bei konstanter Strömungsgeschwindigkeit der Flüssigkeit von dem senkrechten Abstand des Partikels zur Lamelle beim Eintritt in den Schrägklärer sowie der Länge und dem Anstellwinkel des Schrägklärers ab. Man sieht leicht, dass ein kritischer Teilchenradius $r_0$ existiert, so dass alle Partikel mit $r > r_0$ vollständig vom Schrägklärer zurückgehalten werden. Die Gerade (30) in Fig. 8 zeigt die Bahn eines Partikels mit dem Grenzradius $r_0$. Die Bahnen aller Partikel, deren Radius größer ist, weisen einen kleineren Winkel gegen die Horizontale auf und treffen daher mit Sicherheit auf einer Lamelle oder der Bodenplatte auf. Das bedeutet, dass sie zurückgehalten werden. Durch Anpassung der Verhältnisse im Schrägklärer, insbesondere der Strömungsgeschwindigkeit der Flüssigkeit kann also eine Obergrenze für den Teilchendurchmesser der Feinpartikel, die den Schrägklärer im Oberlauf verlassen, eingestellt werden. Solange der Oberlauf des Schrägkläres über einen Umlaufbehälter (13) wie in Fig.10 bis 12 in den Rührreaktor zurückfließt, ändert sich am Gesamtsystem nichts. Entnimmt man mit einer Pumpe einen Teil der durch den Feinanteil des Feststoffes getrübten Flüssigkeitsmenge aus dem Umlaufbehälter, so wird ein definierter Bruchteil des Feinkorns ausgetragen, und man kann direkt in die Entwicklung der Partikelgrößenverteilung eingreifen. Dies stellt eine für die Steuerung von Fällungsprozessen neue Variationsmöglichkeit dar, wodurch die Partikelgröße sowie die Partikelgrößenverteilung unabhängig von den anderen Anlagenparametern beeinflusst werden können.

Durch die beschriebene Entnahme von Trübelauf, dessen Feststoffkonzentration beim Eintritt in den Umlaufbehälter typischerweise 0,5 bis 5% der Feststoffkonzentration im Reaktor beträgt, erhöht man natürlich gleichzeitig auch die Feststoffkonzentration der Suspension im Reaktor, denn mit der gezielten Entnahme des Feinkornanteils wird dem Gesamtsystem überproportional viel Mutterlauge entzogen. Dies ist in der Regel gewünscht, ist aber unerwünscht, wenn die Feststoffkonzentration im Reaktor auf niedrigem Niveau gehalten werden soll und durch Einstellung anderer Stoffströme der Erhöhung der Feststoffkonzentration nicht hinreichend entgegengewirkt werden kann. Je nach Menge und Spezifikation kann dieser Feinanteil anschließend wieder der Produktsuspension zugemischt werden. Entscheidend ist die Trennung im Reaktor-Klärer-System.

In diesem Fall bietet es sich an, über ein Filterelement (16) in Fig. 10 bis 12 Mutterlauge aus dem Umlaufbehälter zu entnehmen und direkt in den Reaktor zurückzupumpen, um die Feststoffkonzentration der Trübe zu erhöhen. Bei Austrag derselben Menge Feinkorn wird dann weniger Mutterlauge entzogen. Als Feinkorn werden die Partikel bezeichnet, deren Größe 30% des $D_{50}$ - Wertes der Partikelgrößenverteilung nicht überschreitet. Es kann auch vorteilhaft sein, im Umlaufbehälter dem System nur Mutterlauge über das Filterelement zu entnehmen. Hierdurch kann man den Feststoffgehalt im Reaktor erstens auf ein Mehrfaches der stöchiometrischen Feststoffkonzentration erhöhen und zweitens eine Entkopplung zwischen der Konzentration gegebenenfalls bei der Fällungsreaktion entstehenden Neutralsalzes und der Feststoffkonzentration erreichen. Das Konzentrationsverhältnis Feststoff zu Salz im Reaktor kann durch die Möglichkeit der Entnahme von Mutterlauge beispielsweise nicht nur durch Erhöhung der Feststoffkonzentration bei konstanter Salzkonzentration vergrößert werden, sondern auch dadurch, dass bei konstanter Feststoffkonzentration dem Reaktor salzfreies Lösungsmittel zugegeben und gleichzeitig die äquivalente Menge Mutterlauge über das Filterelement dem System entzogen wird.

Die Erreichung der zusätzlichen Freiheitsgrade bei gleichzeitiger Steigerung der Flexibilität des IRKS soll am Beispiel der beiden Parameter Salzkonzentration und Feststoffgehalt für die allgemeine Reaktion AX + BY => $AY_{fest}$ + $BX_{gelöst}$, näher erläutert werden. AX und BY sollen die Edukte in den Eduktlösungen und BX gelöstes Salz in der Mutterlauge bedeuten. AY stellt das als unlöslicher Feststoff anfallende Produkt dar.

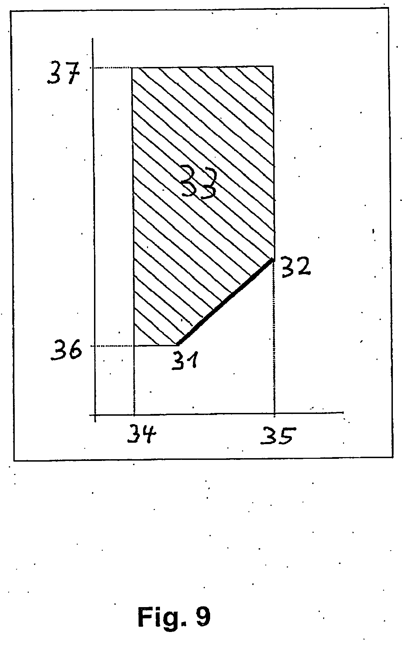

In Fig. 9 ist schematisch die Erweiterung der vorhandener und Schaffung neuer Freiheitsgrade für die vorbenannte Reaktion dargestellt. Darin bedeuten:

    (37) - Technische Grenze,
    (35) - Chemische Grenze,
    (34, 36) - Wirtschaftliche Grenze.

In Fig. 9 zeigt der fettgedruckte Abschnitt als (31 - 32) den Bereich, der nach dem Stand der Technik für die Variation der beiden Prozessparameter Neutralsalzkonzentration in der Mutterlauge und Feststoffkonzentration in der Suspension zur Verfügung steht. Nach oben ist diese Gerade durch die Löslichkeit des Salzes BX limitiert, nach unten existiert eine wirtschaftliche Grenze für einen Mindestfeststoffgehalt. Aufgrund der Stöchiometrie der Reaktion ist man also dem Stand der Technik entsprechend auf einen eindimensionalen Raum bezüglich dieser beiden Parameter eingeschränkt. Mit Hilfe des IRKS und des erfindungsgemäßen Verfahrens wird dieser eindimensionale Bereich zu einem zweidimensionalen Bereich (33) erweitert, dahingehend, dass die maximale Feststoffkonzentration um ein Mehrfaches erhöht und gleichzeitig die minimale Salzkonzentration signifikant herabgesetzt werden kann und sämtliche Kombinationen aus den nun erweiterten Bereichen für die Feststoffkonzentration und die Neutralsalzkonzentration eingestellt werden können. Die hierdurch gewonnene Flexibilität in der Prozessführung ist unmittelbar einleuchtend. Eine Bewegung im Diagramm vertikal nach oben entspricht Entnahme von Mutterlauge und hat die korrespondierende Erhöhung der Feststoffkonzentration zur Folge. Einer Bewegung im Diagramm horizontal nach links entspricht der Zuführung von zusätzlichem Lösungsmittel bei gleichzeitiger Entnahme der korrespondierenden Menge an Mutterlauge.

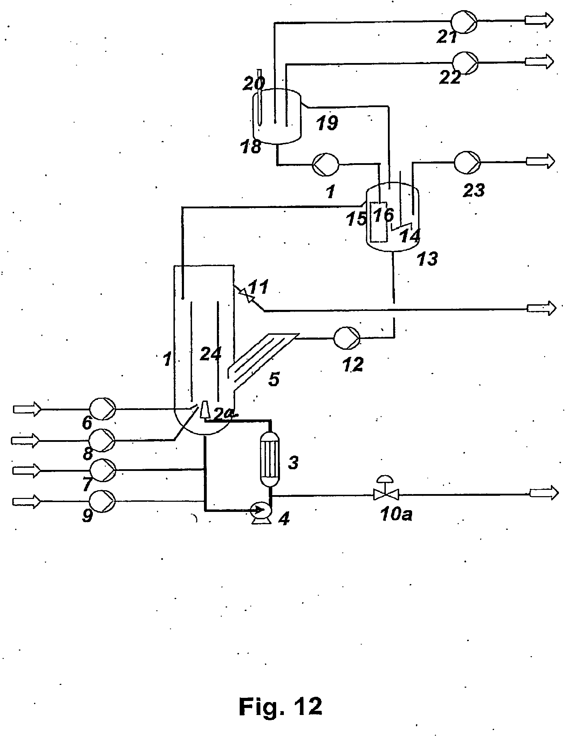

Das IRKS kann sowohl offen als auch geschlossen betrieben werden. Ein geschlossenes System ist z. B. ein Treibstrahlreaktor, der in Fig. 4 und Fig. 5 und in Fig. 12 dargestellt ist. Bei diesem Reaktor kann der Schrägklärer (5) sowohl im oberen, Fig. 4 als auch im unteren Bereich, Fig. 5 und 12 angeordnet sein. Die Edukte werden hier durch eine oder mehrere Düsen (2a) in die Reaktionszone des Reaktors eingeführt, wo diese eine intensive Durchmischung bzw. Homogenisierung erfahren,**wie in** Fig. 4 und 5 und 12 dargestellt.

Das IRKS kann für Fällungen eingesetzt werde, die batchweise erfolgen. Bevorzugt wird dieses jedoch für Fällprozesses in der kontinuierlichen Arbeitsweise.

Die Erfindung betrifft weiterhin ein Verfahren gemäß Anspruch 8 zur Herstellung von Verbindungen durch Fällung, in dem die einzelnen Prozessparameter z.B. (Konzentration der Edukte, Feststoffgehalt in der Suspension, Salzkonzentration in der Mutterlauge), während der Fällung unabhängig voneinander eingestellt werden und so ein kontrollierter Eingriff in die Entwicklung der Partikelgrößenverteilung während des Fällprozesses stattfindet und folglich maßgeschneiderte Produkte mit definierten physikalischen Eigenschaften besonders wirtschaftlich und mit einer sehr hohen Raum-Zeit-Ausbeute hergestellt werden.

Die Eduktlösungen im erfindunsgemäßen Verfahren werden in den Reaktor mit Hilfe eines Pumpsystems eingeleitet. Handelt es sich dabei um das erfindungsgemäße IRKS mit einem Rührreaktor, werden die Edukte unter Rühreteinsatz gemischt. Wenn das IRKS in Form eines Treibstrahlreaktors ausgeführt ist, erfolgt die Vermischung der Edukte durch den austretenden Strahl einer Düse, Fig. 12 (2a). Um eine noch bessere Vermischung der Edukte zu erreichen, kann auch zusätzlich Luft oder Inertgas in den Reaktor eingeleitet werden.

Um eine gleichmäßige Produktqualität zu erreichen, ist es erforderlich, daß die Edukte in der Reaktionszone des Reaktors homogen durchmischt sind. Schon während der Vermischung bzw. Homogenisierung der Edukte beginnt eine Fällreaktion, bei der das Produkt und die Mutterlauge erzeugt werden. Die Produkt-Suspension wird im unteren Reaktorteil bis zu einer gewünschten Konzentration angereichert. Um eine gezielte Anreicherung der Produktsuspension zu erreichen, wird im erfindungsgemäßen Verfahren die Mutterlauge über den Schrägklärer, Fig. 10 (5), partiell abgezogen. Bevorzugt findet die partielle Abtrennung der Mutterlauge durch die Entnahme des Schrägklärer-Oberlaufs mit Hilfe einer Pumpe statt. Der Feststoffgehalt des Oberlaufs kann bis zu 50%, bevorzugt bis zu 30%, besonders bevorzugt bis zu 15 % und insbesondere bevorzugt bis zu 5 % der Produktsuspension enthalten. Eine wichtige Rolle bei der Entwicklung der Korngrößenverteilung während des Fällprozesses spielt die maximale Teilchengröße im Oberlauf. Die Teilchen im Oberlauf werden als Feinkorn bezeichnet. Diese maximale Teilchengröße im Oberlauf kann bis zu 50%, bevorzugt bis zu 40%, besonders bevorzugt bis zu 30% des $D_{50}$-Wertes der Teilchengrößenverteilung betragen.

Nach dem erfindungsgemäßen Verfahren wird eine Konzentration der Fällprodukt-Suspension erreicht, die ein Vielfaches der stöchiometrisch möglichen Konzentration des Fällproduktes betragen kann. Diese kann bis 20 mal höher liegen als der mögliche stöchiometrische Wert. Zur Erreichung einer besonders hohen Produktkonzentration in der Suspension ist es notwendig eine hohe Menge der Mutterlauge partiell abzuziehen. Es können sogar bis zu 95 % der Mutterlauge partiell abgetrennt werden. Die Menge der partiell abzutrennenden Mutterlauge hängt von den gewählten Prozessparametern wie Eduktkonzentrationen, Salzkonzentration der Mutterlauge sowie Feststoffkonzentration der Suspension ab.

Das erfindungsgemäße Verfahren ist in Fig. 10 schematisch dargestellt und wird nun zum besseren Verständnis nachfolgend wie folgt erörtert:

Einem Rührreaktor (1), ausgestattet mit drehzahlgeregeltem Rührer (2), Wärmetauscher (3), optional einer Umlaufpumpe (4) und einem Schrägkläreransatz (5), der eine höherverstellbare, planparallel zu seiner Eintrittsöffnung angeordnete Platte (25) aufweist, werden kontinuierlich mit den Dosierpumpen (6) bis (8) Eduktlösungen, eventuell Katalysatorlösungen sowie Lösungsmittel in die homogen durchmischte Reaktionszone des erfindungsgemäßen Integrierten Reaktor-Klärer-Sytems (IRKS) gefördert. Die entstehende Produktsuspension wird mit der Pumpe (10) über eine Regelung des Füllstandes entnommen oder fließt über den freien Überlauf (11) ab. Bei der Herstellung großer Partikel kann es vorteilhaft sein, die Zirkulationspumpe (4) in Betrieb zu nehmen, um der Gefahr von Sedimentation vorzubeugen.

Die Pumpe (12), in Abhängigkeit von der Höhe des Schrägkläres (5) gegebenenfalls in selbstansaugender Ausführung, fördert aus diesem Flüssigkeit mit sehr geringen Konzentrationen von Feinkorn in den mit einem Rührer (14) ausgestatteten Behälter (13) und kann von dort aus dem freien Überlauf (15) in den Reaktor (1) zurückfließen. In Abhängigkeit vom Volumenstrom der Flüssigkeit und der Dimensionierung des Schrägkläreransatzes existiert eine Trenngröße, so dass nur Partikel deren Größe unterhalb dieser Trenngröße liegt, in den Umlaufbehälter (13) befördert werden. Solange der gesamte, mit der Pumpe (12) entnommene Trübelauf über den freien Überlauf (15) zurückläuft, ändert sich für den Reaktor (1) natürlich gar nichts. Dies geschieht erst, wenn Mutterlauge und/oder Feststoffpartikel dem System entzogen werden. Im Folgenden wird zunächst die Entnahme von Mutterlauge beschrieben:

> Durch ein Filterelement (16), beispielsweise einen auch in Querstromfiltrationen verwendeten Filterschlauch, entzieht die Pumpe (17) dem Behälter (13) die klare Mutterlauge und fördert sie in den zweiten Umlaufbehälter (18). Aus diesem Behälter fördert die Pumpe (21) kontinuierlich oder in bestimmten Zeitabständen Probelösung zur - vorzugsweise automatischen- Analyse der Mutterlauge. Eine kontinuierliche Überwachung, beispielsweise durch Messung und Kontrolle des pH-Wertes mit der Sonde (21) kann auch direkt im klare Mutterlauge enthaltenden Umlaufbehälter (18) erfolgen. Das IRKS ermöglicht also auf einfache Weise, die Zusammensetzung der Mutterlauge während der gesamten Fällung zu kontrollieren, was naturgemäß in einer hoch feststoffhaltigen Suspension sehr schwierig ist. Wird nun aus dem Umlaufbehälter (18) über Pumpe (22) Mutterlauge dem System entzogen, kann die Feststoffkonzentration im Reaktor (1) unabhängig von den Eduktkonzentrationen eingestellt werden. Auf diese Weise geschieht auch eine Entkopplung zwischen der Festoffkonzentration der Suspension und der Konzentration von Salzen in der Mutterlauge, die bei vielen Fällungsreaktionen als Nebenprodukt entstehen.

Die natürliche Feststoffkonzentration kann um ein Vielfaches gesteigert werden, und die damit erzielbaren Raum-Zeit-Ausbeuten sind nach den üblichen Methoden nicht oder nur sehr schwer zu realisieren. Die direkte Entnahme von Mutterlauge über eine Querstromfiltration, die beispielsweise in den Kreislauf der Pumpe (4) des Reaktors (1) geschaltet wird, ist nicht praktikabel, da durch die hohe Feststoffkonzentration andauernd Verstopfungen auftreten würden, was naheliegend ist.

Fällt man beispielsweise $BaSO_4$ aus $Ba(OH)_2$-Lösung und Schwefelsäure, so entsteht als Nebenprodukt Wasser und die Entkopplung reduziert sich auf die Prozessparameter Ba - und $H_2SO_4$-Konzentration in den Eduktlösungen und $BaSO_4$-Konzentration in der Produktsuspension. Bei der Fällung von Nickelhydroxid, aus beispielsweise Nickelsutfatlösung und Natronlauge entsteht Natriumsulfat als Nebenprodukt. Der Feststoffgehalt der Suspension und die Salzkonzentration können nun unabhängig voneinander eingestellt werden. Die Erhöhung des Feststoffgehaltes war soeben beschrieben worden. Will man auch die Salzkonzentration unabhängig von den Eduktkonzentrationen einstellen, kann man mit Pumpe (9) Wasser in das System fördern und über die Pumpe (22) die entsprechende Menge Mutterlauge entfernen, so dass beispielsweise eine vorgegebene Feststoffkonzentration erhalten bleibt.

Ein wesentliches Merkmal des erfindungsgemäßen Verfahrens sowie des erfinindungsgemäß integrierten Reaktorklärersystems IRKS ist es auch, durch die Entnahme von Trüblauf aus dem System über die Pumpe (23) dem Reaktionssystem eine definierte Fraktion an Feinkorn zu entziehen, um so direkt in die Entwicklung der Partikelgrößenverteilung des Produktes einzugreifen. Weiter oben wurde bereits beschrieben, daß für die Feststoffpartikel im Umlaufbehälter (13) eine obere Korngröße existiert, die durch die Dimensionierung des Schrägkläreransatzes (5) und die Umlaufmenge der Pumpe (12) bestimmt ist. Der Rührer (14) sorgt dafür, daß diese feinen Partikel homogen in der Flüssigkeit verteilt sind. Damit ist eine definierte Abnahme einer Feinkomfraktion aus dem Gesamtsystem und damit auch aus dem Reaktor (1) möglich. In der Regel beträgt die Feinkornfraktion nur wenige Prozent der Gesamtmasse, aber ihr Anteil beeinflusst entscheidend die Entwicklung der Kornverteilung des im Reaktor produzierten Feststoffes. Ein direkter Eingriff in den Wachstumsmechanismus der Partikel bei einer Fällungsreaktion ist mit den üblichen Verfahren gemäß dem Stand der Technik nicht möglich und wird hier erstmals realisiert. Die sich hieraus ergebenden Möglichkeiten sind vielfältig. Nicht nur die kontrollierte Verschiebung des $D_{50}$-Wertes der Partikelgrößenverteilung, sondern auch die Einstellung der Breite der Verteilung ist möglich. Der Prozess lässt sich somit durch diesen neuen Freiheitsgrad besser steuern, insbesondere können sphärische Partikel mit höherer mittlerer Korngröße hergestellt werden, als es sonst unter den Reaktionsbedingungen möglich wäre.

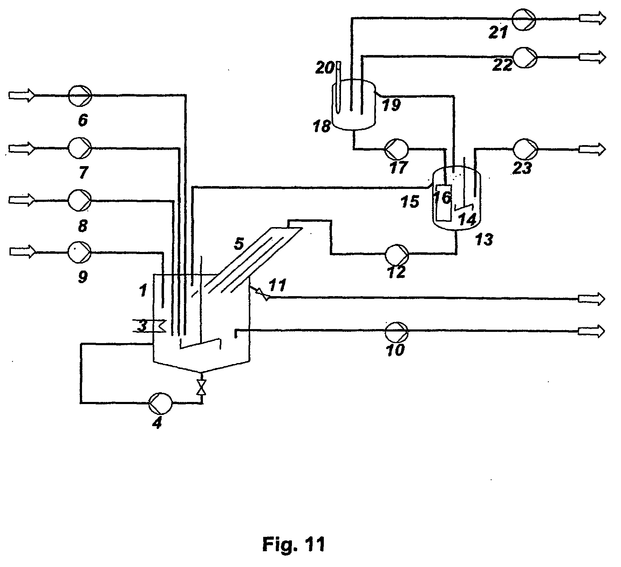

Das in Fig. 11 dargestellte erfindungsgemäße Verfahren, unterscheidet sich von dem oben beschriebenen Verfahren in Fig. 10 dadurch, daß hier ein Integriertes Reaktor-Klärer-System mit einem Schrägklärer verwendet wird, der am Reaktor oben angeordnet ist. Fig. 12 stellt ein Verfahren dar, bei dem die Fällungsreaktion in einem geschossenen IRKS (1) welches als Treibstrahlreaktor ausgeführt ist, stattfindet.

Mit dem erfindungsgemäßen Verfahren lassen sich zahlreiche chemische Verbindungen herstellen, deren physikalische Eigenschaften, wie z.B. Korngröße, Korngrößenverteilung, Schüttgewicht, Korngrößenverteilung, Klopfdichte, Teilchenform etc. ganz gezielt beeinflusst werden können, so dass am Ende des Prozesses maßgeschneiderte Produkte erhalten werden. Derartige Verbindungen sind z.B. Carbonate oder basische Carbonate des Cobalts, des Nickels oder des Zinks, die mit unterschiedlichen Dotierungselementen versetzt sein können. Das erfindungsgemäße Verfahren eignet sich auch bevorzugt zur Herstellung von Zinkoxiden, Kupferoxiden oder Silberoxiden. Weiterhin ist das erfindungsgemäße Verfahren besonders gut geeignet zur Herstellung von Tantaloxiden, Nioboxiden, Tantalaten und Niobaten. Titandioxid, Zirkoniumdioxid und Hafniumdioxid können ebenfalls hergestellt werden, wobei die Oxide mit Metallen anderer Wertigkeitsstufen, wie Seltenerd-Elementen, beispielsweise den Yttrium, Ytterbium oder Scandium dotiert sein können. Ammoniumdimolybdate, Ammoniumheptamolybdate, Dimolybdate, Heptamolybdate, Parawolframate, Ammoniumparawolframat, sphäroidische Wolframsäure und Molybdänsäure können ebenfalls vorteilhaft mit dem erfindungsgemäßen Verfahren hergestellt werden.

Oxide der Seltenerdmetalle können ebenfalls hergestellt werden. IRKS kann vorteilhaft genutzt zur Herstellung von Spinellen, Perowskitten und Festkörperverbindungen mit Rutilstruktur. Schwerlösliche Halogenide und Sulfide sind durch das erfindungsgemäße Verfahren ebenfalls mit hoher Raumzeitausbeute und hohen Klopfdichten erhältlich. Das erfindungsgemäße Verfahren eignet sich ganz besonders zur Herstellung gecoateter Produkte, indem ein gleichmäßiges Coating der unterschiedlichsten Art in hochkonzentrierter Suspension durch geführt werden kann.

Insbesondere lassen sich mit diesem Verfahren Verbindungen herstellen die sich besonders gut als Vorstoffe für den Einsatz in den elektrochemischen Zellen und/oder als Elektrodenmaterial bei der Herstellung von Brennstoffzellen eignen. Diese sind Nickelhydroxide, oder Nickeloxyhydroxide, die mit einem oder mehreren zweiwertigen oder dreiwertigen Metallen wie beispielsweise Co, Zn, Mn, Al, und/oder dreiwertigen Seltenerd-Elementen dotiert sein können, aber auch Beschichtungen in Form von Cobalt- oder beispielsweise Aluminiumhydroxiden können auf Basiskomponenten, wie z. B. Nickelhydroxide erfindungsgemäß aufgefällt werden. Lithiumeisenphosphate mit definierten physikalischen Eigenschaften sind ebenfalls über IRKS zugänglich. Besonders bevorzugt werden nach dem erfindungsgemäßen Verfahren Nickel-Cobalt-Mischhydroxide der allgemeinen Formel $Ni_xCo_{1-x}(OH)_2$ hergestellt, die als Vorstoffe in den elektrochemischen Zellen und/oder als Elektrodenmaterial bei der Herstellung von Brennstoffzellen bevorzugt eingesetzt werden.

Mit dem erfindungsgemäßen Verfahren herstellbar sind pulverförmige Ni,Co - Mischhydroxide der allgemeinen Formel $Ni_xCo_{1-x}(OH)2$, wobei 0 < x < 1, die eine BET-Oberfläche, gemessen nach ASTM D 3663 von weniger als 20 m2/g und eine Klopfdichte, gemessen nach ASTM B 527, von größer als 2,4 g/cm3 aufweisen.

Bevorzugt weisen die Ni,Co-Mischhydroxide eine BET-Oberfläche von weniger als 15 m2/g und eine Klopfdichte von größer als 2,45 g/cm3, besonders bevorzugt eine BET-Oberfläche von weniger als 15 m2/g und

eine Klopfdichte von größer als 2,5 g/cm3 und insbesondere bevorzugt eine BET-Oberfläche von weniger als 15 m2/g und eine Klopfdichte von größer als 2,55 g/cm3 auf.

Die pulverförmige Ni,Co-Mischhydroxide zeichnen sich auch dadurch aus, dass sie einen $D_{50}$-Wert bestimmt mittels MasterSizer nach ASTM B 822 von 3-30 $\mu$m, bevorzugt von 10-20 $\mu$m aufweisen.

Die Ni,Co-Mischhydroxide können sowohl in sphäroidischer als auch in regulärer Partikelform hergestellt werden. Die bevorzugten Ni, Co - Mischhydroxide zeichnen sich besonders durch die sphäroidische Form der Partikel aus, deren Formfaktor einen Wert von größer 0,7, besonders bevorzugt von größer 0,9 aufweist. Der Formfaktor der Partikel kann nach der in US 5476530, Spalten 7 und 8 und Abbildung genannten Methode bestimmt werden. Diese Methode ermittelt einen Formfaktor der Partikel, welcher ein Maß für die Sphärizität der Partikel ist. Der Formfaktor der Partikel kann auch aus den REM-Aufnahmen der Materialien bestimmt werden. Der Formfaktor wird durch die Evaluierung des Partikelumfangs sowie der Partikelfläche und der Bestimmung des aus der jeweiligen Größe abgeleiteten Durchmessers bestimmt Die genannten Durchmesser ergeben sich aus

$$d_U = U/\pi$$

$$d_A = \left(4A/\pi\right)^{\frac{1}{2}}.$$

Der Formfaktor der Partikel f leitet sich ab aus dem Partikelumfang U und der Partikelfläche A gemäß:

$$f = \left(\frac{d_A}{d_U}\right) = \left(\frac{4\pi A}{U^2}\right).$$

Im Falle eines idealen sphärischen Partikels sind $d_A$ und $d_U$ gleich groß und es würde sich ein Formfaktor von genau eins ergeben.

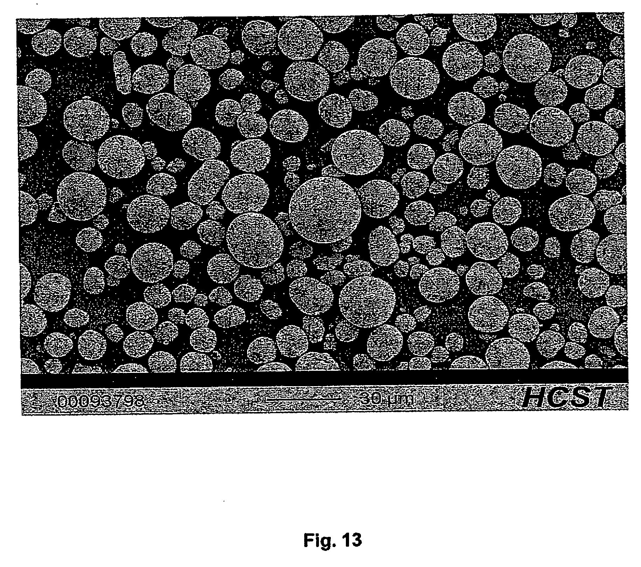

Fig. 13 zeigt beispielhaft eine mit einem Rasterelektromenmikroskop (REM) aufgenommenen Abbildung des Ni,Co-Mischmetallhydroxides des gemäß Beispiel 1 hergestellt wurde.

Der Einsatz der Apparatur IRKS und des erfindungsgemäßen Verfahrens erhöht also bedeutend die Flexibilität gegenüber den klassischen Fällungen in herkömmlichen Reaktorsystemen und die sich hieraus ergebenden Vorteile können für viele verschiedene Verbindungstypen genutzt werden. Diese Vorteile der vorliegenden Erfindung lassen sich wie folgt zusammenfassen:

a) Entkopplung der für Fällungen wichtigen Prozessparameter wie Eduktkonzentrationen, Feststoffkonzentration und Neutralsalzkonzentration und somit Gewinnung neuer Freiheitsgrade, die die Möglichkeiten eines maßgeschneiderten Produktdesigns entscheidend verbessern.

b) Durch Entkopplung von Feststoffverweilzeit und Mutterlaugenverweilzeit Erhöhung der Raum-Zeit-Ausbeute und damit der Produktionsrate.

c) Schaffung eines völlig neuen Freiheitsgerades, indem eine definierte Menge Feinfraktion aus dem System entnommen wird, somit die

Partikelgrößenverteilung gezielt beeinflußt werden kann und daher die Eigenschaften des resultierenden Produktes weiter im Hinblick auf das jeweils anwendungstechnisch als optimal vorgegebene Profil zu beeinflussen sind.

Die Verteile der Erfindung werden anhand der nachfolgenden Beispiele näher erläutert.

Die in den Beispielen angegebenen physikalischen Parameter der Produkte werden wie folgt ermittelt

- Die Kristallitgröße wird aus der Halbwertsbreite des 101 - Röntgenreflexes berechnet.
- Die spezifische Oberfläche BET wird nach ASTM D 3663 ermittelt.
- Der $D_{50}$-Wert wird aus der Teilchengrößenverteilung, gemessen mit

MasterSizer bestimmt.

- Die Klopfdichte wird nach ASTM B 527 ermittelt
- Der Formfaktor wird nach der Methode aus US 5476530 ermittelt

**Beispiele**

Beispiel 1

Der in Fig.10 dargestellte IRKS wird mit 200 Liter wässrigen Mutterlauge enthaltend 2 g/l NaOH, 13 g/l $NH_3$, 130 g/l $Na_2SO_4$ befüllt. Anschließend werden die Zirkulationspumpe (4) mit einem Volumenstrom von 5 $m^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) In den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 UpM in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 25 l/h eine Metallsulfatlösung die 101,9 g/l Nickel und 18,1 g/l Cobalt enthält. Mit Pumpe (7) werden 5,6 l/h Natronlauge (NaOH) mit einer Konzentration von 750 g/l zudosiert. Pumpe (8) fördert 3,1 l/h 25-%ige Ammoniaklösung und Pumpe (9) 21,8 l/h entsalztes Wasser in den Reaktor. Anschließend werden die Pumpen (21) und (22) zugeschaltet, die Mutterlauge aus dem System entnehmen. Pumpe (21) fördert 46,9 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Die Pumpe (10) fördert über eine Füllstandsregelung die entstandene Produktsuspension mit einem Feststoffgehalt von 600 g/l aus dem Reaktor zu einer nachgeschalteten Filternutsche; auf der filtriert und gewaschen wird. Nach 100 Stunden hat der Reaktor einen stationären Zustand erreicht. Das, innerhalb der folgenden 24h entstehende das Produkt, wird nach dem Waschen mit 400 l Wasser im Trockenschrank bei 80°C bis zur Gewichtskonstanz getrocknet. Man erhält 115. kg Ni,Co-Mischhydroxid $(Ni,Co)(OH)_2$ mit folgenden Produkteigenschaften:

Kristallitgröße : 110 Angström
BET: 6,3$m^2$/g
$D_{50}$-Wert : 11,2 $\mu$m
Klopfdichte: 2,46 g/$cm^3$.

Die REM-Aufnahme in Fig. 13 zeigt die besondere Sphärizität des hergestellten Ni,Co-Mischhydroxides, dessen Formfaktor 0,8 beträgt.

Beispiel 2

Der in Fig.10 dargestellte IRKS wird mit 200 Liter wässrige Mutterlauge enthaltend 2 g/l NaOH, 13 g/l $NH_3$, 130 g/l $Na_2SO_4$ befüllt. Anschließend werden die Zirkulationspumpe (4) mit einem Volumenstrom von 5 $m^3$/h und Pumpe **(12)** mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 upm (UpM) in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 25 l/h eine Metallsulfatlösung die 101,9 g/l Nickel und 18,1 g/l Cobalt enthält. Mit Pumpe (7) werden 5,6 l/h Natronlauge (NaOH) mit einer Konzentration von 750 g/l zudosiert. Pumpe (8) fördert 3,1 l/h 25 %ige Ammoniaklösung und Pumpe (9) 21,8 l/h entsalztes Wasser in den Reaktor. Anschließend werden die Pumpen (21) und (22) zugeschaltet, die Mutterlauge aus dem System entnehmen. Pumpe (21) fördert 15,4 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Mit der Pumpe (23) werden 32L/h tübe Lösung mit einem Feststoffgehalt von 1,5g/l aus dem IRKS (Umlaufbehälter (10)) entfernt. Die Pumpe (10) fördert über eine Füllstandsregelung die entstandene Produktsuspension mit einem Feststoffgehalt von 600 g/l aus dem Reaktor zu einer nachgeschalteten Filternutsche, auf der filtriert und gewaschen wird. Nach 100 Stunden hat der Reaktor einen stationären Zustand erreicht Das innerhalb der folgenden 24h entstehende das Produkt wird nach dem Waschen mit 400 l Wasser im Trockenschrank bei 80°C bis zur Gewichtskonstanz getrocknet. Man erhält 115 kg Ni,Co-Mischhydroxid $(Ni,Co)(OH)_2$ mit folgenden Produkteigenschaften:

> Kristallitgröße : 108Angström
> BET: 6,1m$^2$/g
> D$_{50}$-Wert: 15,2µm
> Klopfdichte: 2,54g/cm$^3$.
> Formfaktor: 0,9

Beispiel 3

Der in Fig. 11 dargestellte IRKS wird mit 200 Liter wässrigen Mutterlauge enthaltend 5 g/l NaOH, 10 g/l NH$_3$, 172 g/l Na$_2$SO$_4$ befüllt. Anschließend werden die Zirkulationspumpe (4) mit einem Volumenstrom von 5 m$^3$/h und Pumpe **(12)** mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 480 upm (UpM) in Betrieb genommen wurde und mit dem Wärmetauscher (3) eine Temperatur von 45°C im gesamten System eingestellt wurde, werden zunächst die Dosierpumpen für die Eduktlösungen in Betrieb genommen. Die Pumpe (6) fördert mit einem Volumenstrom von 20,4 l/h eine Metallsulfatlösung die 109,6 g/l Nickel, 2,84 g/l Cobalt und 7,57 g/l Zink enthält. Mit Pumpe (7) werden 4,62 l/h Natronlauge (NaOH) mit einer Konzentration von 750 g/l zudosiert. Pumpe (8) fördert 1,51 l/h 25 %ige Ammoniaklösung und Pumpe (9) 8,29 l/h entsalztes Wasser in den Reaktor. Anschließend werden die Pumpen (21) und (22) zugeschaltet, die Mutterlauge aus dem System entnehmen. Pumpe (21) fördert 3,0 l/h zur Abwasser-Behandlungsanlage, in der auch Ammoniak zurückgewonnen wird. Die Pumpe (22) führt 1 l/h der Mutterlauge einem automatischen Analysegerät zu, in dem 3 mal pro Stunde Ammoniak-Gehalt und überschüssige Natronlauge bestimmt werden. Mit der Pumpe (23) werden 20,5L/h trübe Lösung mit einem Feststoffgehalt von 2,0g/l aus dem IRKS (Umlaufbehälter (10)) entfernt. Die Pumpe (10) fördert über eine Füllstandsregelung die entstandene Produktsuspension mit einem Feststoffgehalt von 360 g/l aus dem Reaktor zu einer nachgeschalteten Fiftemutsche, auf der filtriert und gewaschen wird. Nach 90 Stunden hat der Reaktor einen stationären Zustand erreicht Das innerhalb der folgenden 24h entstehende das Produkt wird nach dem Waschen mit 400 l Wasser im Trockenschrank bei 80°C bis zur Gewichtskonstanz getrocknet. Man erhält 93 kg Ni,Co,Zn-Mischhydroxid $(Ni,Co;Zn)(OH)_2$ mit folgenden Produkteigenschaften:

> Kristallitgröße : 67Angström
> BET: 10,1m$^2$/g
> D50-Wert: 15,1µm
> Klopfdichte: 2,40g/cm$^3$.
> Formfaktor 0,75

Vergleichsbeispiel 1

Der in Fig.10 dargestellte IRKS wird mit 200 Liter wässrige Mutterlauge enthaltend 2 g/l NaOH, 13 g/l NH$_3$, 130 g/l Na$_2$SO$_4$ befüllt. Anschließend werden die Zirkulationspumpe (4) mit einem Volumenstrom von 5 m$^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 544 upm (UpM) in Betrieb genommen wurde und mit dem Wärmetauscher (3) eine Temperatur von 48°C im gesamten System eingestellt wurde, werden zunächst die Dosierpumpen für die Eduktlösungen in Betrieb genommen. Die Pumpe (6) fördert mit einem Volumenstrom von 4,01 l/h eine Metallsulfatlösung die 101,9 g/l Nickel und 18,1 g/l Cobalt enthält. Mit Pumpe (7) werden 0,89 l/h Natronlauge (NaOH) mit einer Konzentration von 750 g/l zudosiert. Pumpe (8) fördert 0,50 l/h 25 %ige Ammoniaklösung und Pumpe (9) 3,49 l/h entsalztes Wasser in den Reaktor. Anschließend wird die Pumpe (22) zugeschaltet, die 1l/h Mutterlauge aus dem System entnimmt und einem automatischen Analysegerät zuführt, in dem 3 mal pro Stunde Ammoniak-Gehalt und überschüssige Natronlauge bestimmt werden. Die Pumpe (10) fördert über eine Füllstandsregelung die entstandene Produktsuspension mit einem Feststoffgehalt von 96g/l aus dem Reaktor zu einer nachgeschalteten Filternutsche, auf der filtriert und gewaschen wird. Nach 100 Stunden hat der Reaktor einen stationären Zustand erreicht Das innerhalb der folgenden 24h entstehende das Produkt wird nach dem Waschen mit 400 l Wasser im Trockenschrank bei 80°C bis zur Gewichtskonstanz getrocknet. Man erhält 115 kg Ni,Co-Mischhydroxid (Ni,Co)(OH)$_2$ mit folgenden Produkteigenschaften:

Kristallitgröße: 106 Angström
BET: 13,1m$^2$/g
D50-Wert TGV: 21,3$\mu$m
Klopfdichte: 2,23g/cm$^3$.

Vergleichsbeispiel 2

Der in Fig.10 dargestellte IRKS wird mit 200 Liter wässrigen Mutterlauge enthaltend 5 g/l NaOH, 10 g/l NH$_3$, 172 g/l Na$_2$SO$_4$ befüllt. Anschließend werden die Zirkulationspumpe (4) mit einem Volumenstrom von 5 m$^3$/h und Pumpe (12) mit einem Volumenstrom von 90 l/h in Betrieb genommen. Die Pumpe (12) fördert die Mutterlauge aus dem Schrägklärer (5) in den Umlaufbehälter (13), von wo aus sie über den freien Überlauf (15) in den IRKS zurückgelangt. Sobald Flüssigkeit aus dem Überlauf (15) austritt, wird die Pumpe (17) in Betrieb genommen, welche Mutterlauge über das Filterelement (16) in den Umlaufbehälter (18) befördert, von wo aus sie über den freien Überlauf (19) in den Umlaufbehälter (13) zurückläuft. Die Pumpe (17) wird mit einem Volumenstrom von 90 l/h betrieben. Nachdem der Rührer (14) mit 300 Umdrehungen pro Minute und der Rührer (2) mit 480 upm (UpM) in Betrieb genommen wurde und mit dem Wärmetauscher (3) eine Temperatur von 45°C im gesamten System eingestellt wurde, werden zunächst die Dosierpumpen für die Eduktlösungen in Betrieb genommen. Die Pumpe (6) fördert mit einem Volumenstrom von 6,69 l/h eine Metallsulfatlösung die 109,6 g/l Nickel, 2,84 g/l Cobalt und 7,57 g/l Zink enthält. Mit Pumpe (7) werden 1,52 l/h Natronlauge (NaOH) mit einer Konzentration von 750 g/l zudosiert. Pumpe (8) fördert 1,51 l/h 25 %ige Ammoniaklösung und Pumpe (9) 8,29 l/h entsalztes Wasser in den Reaktor. Anschließend wird die Pumpe (22) zugeschaltet, die 1 l/h Mutterlauge einem automatischen Analysegerät zuführt, in dem 3 mal pro Stunde Ammoniak-Gehalt und überschüssige Natronlauge bestimmt werden. Die Pumpe (10) fördert Ober eine Füllstandsregelung die entstandene Produktsuspension mit einem Feststoffgehalt von 120 g/l aus dem Reaktor zu einer nachgeschalteten Filternutsche, auf der filtriert und gewaschen wird. Nach 90 Stunden hat der Reaktor einen stationären Zustand erreicht Das innerhalb der folgenden 24h entstehende das Produkt wird nach dem Waschen mit 150 l Wasser im Trockenschrank bei 80°C bis zur Gewichtskonstanz getrocknet. Man erhält 30,5 kg Ni,Co,Zn-Mischhydroxid (Ni,Co;Zn)(OH)$_2$ mit folgenden Produkteigenschaften:

Kristallitgröße: 63Angström
BET: 12,0m$^2$/g
D$_{50}$-Wert: 11,9$\mu$m
Klopfdichte: 2,21g/cm$^3$.

**Patentansprüche**

1. Vorrichtung zur Herstellung von Verbindungen durch Fällung, wobei die Vorrichtung einen Rührreaktor (1) mit integriertem Schrägklärer (5), wobei der Schrägklärer (5) zu seiner Bodenfläche planparallel angebrachte Lamellen (3) enthält, als zentrale Einheit aufweist, wobei die Eintrittsfläche des Schrägklärers (5) derart am Rührreaktor (1) angeordnet ist, dass die auf der Oberfläche der Lamellen sedimentierten Feststoffpartikel nur in den Rührreaktor (1) zurückrutschen können und wobei die Vorrichtung weiterhin eine Pumpe (12) und einen Umlaufbehälter (13) aufweist, derart ausgestaltet, dass der Oberlauf des Schrägklärers (5) durch die Pumpe (12) in den Umlaufbehälter (13) befördert wird, wobei der Umlaufbehälter (13) ein Filterelement (16) mit Entnahmeleitung für klare Mutterlauge, einen freien Überlauf (15) zum Rührreaktor (1) und eine Entnahmeleitung für Trübe mit einer weiteren Pumpe (23) enthält.

2. Vorrichtung nach Anspruch 1, **dadurch gekennzeichnet, dass** der Neigungswinkel des Schrägklärers 20 bis 85° beträgt.

3. Vorrichtung nach Anspruch 1 oder 2 **dadurch gekennzeichnet, daß** der Neigungswinkel des Schrägklärers 40 bis 70° beträgt.

4. Vorrichtung nach einem der Ansprüche 1 bis 3, **dadurch gekennzeichnet, dass** der Schrägklärer innen seitlich auf jeder Seite ein höhenverstellbares Schienensystem zur Aufnahme der Lamellen, bestehend aus mindestens einem Schienenpaar, aufweist.

5. Vorrichtung nach einem der Ansprüche 1 bis 3, **dadurch gekennzeichnet, dass** der Schrägklärer innen seitlich auf jeder Seite mindestens eine Nut zur Aufnahme von Lamellen aufweist.

6. Vorrichtung nach Anspruch 1, **dadurch gekennzeichnet, dass** die Lamellen mindestens 0,5 cm dick sind.

7. Verwendung der Vorrichtung nach einem der vorhergehenden Ansprüche zur Herstellung von Verbindungen durch Fällung.

8. Verfahren zur Herstellung von Verbindungen durch Fällung in einer Vorrichtung gemäß Anspruch 1 bestehend aus folgenden Schritten:

- Bereitstellen von mindestens einer ersten und einer zweiten Eduktlösung,
- Zusammenführen von mindestens der ersten und der zweiten Eduktlösung in dem Rührreaktor (1),
- Erzeugung einer homogen durchmischen Reaktionszone im Rührreaktor (1),
- Fällung der Verbindungen in der Reaktionszone und Erzeugung einer Produktsuspension, bestehend aus unlöslichem Produkt und Mutterlauge,
- Partielle Abtrennung der Mutterlauge vom unlöslichen Produkt über den Schrägklärer (5),
- Einstellung eines Feinkornanteils mit einer definierten Obergrenze der Teilchendurchmesser im Oberlauf des Schrägklärers (5) durch partielle Abtrennung des Oberlaufs, wobei gegebenenfalls der Feinkornanteil der Produktsuspension wieder zugemischt wird,
- Herstellung einer Fällprodukt - Suspension, deren Konzentration des Fällproduktes höher als die stöchiometrische Konzentration ist,
- Entnahme der Produktsuspension aus dem Rührreaktor (1),
- Filtration und Trocknung des Fällproduktes.

9. Verfahren nach Anspruch 8, **dadurch gekennzeichnet, dass** die partielle Abtrennung der Mutterlauge durch direkte Entnahme des Oberlaufs des Schrägklärers erfolgt.

10. Verfahren nach Anspruch 9, **dadurch gekennzeichnet, dass** der Oberlauf des Schrägklärers 0 bis 50% des Feststoffgehaltes der Produktsuspension aufweist.

11. Verfahren nach Anspruch 10, **dadurch gekennzeichnet, dass** der Oberlauf des Schrägklärers 0 bis 30% des Feststoffgehaltes der Produktsuspension aufweist.

12. Verfahren nach Anspruch 11, **dadurch gekennzeichnet, dass** der Oberlauf des Schrägklärers 0 bis 15% des Feststoffgehaltes der Produktsuspension aufweist.

13. Verfahren nach einem der Ansprüche 8 bis 12, **dadurch gekennzeichnet, dass** die maximale Partikelgröße im Oberlauf des Schrägklärers 30% des $D_{50}$-Wertes der Partikelgrößenverteilung beträgt.

14. Verfahren nach Anspruch 8, **dadurch gekennzeichnet, dass** die Konzentration des Fällproduktes in der Suspension ein Vielfaches der stöchiometrischen Menge beträgt.

15. Verfahren nach Anspruch 8 oder 9, **dadurch gekennzeichnet, dass** bis zu 90% der Mutterlauge partiell abgetrennt werden.

**Claims**

1. Apparatus for preparing compounds by precipitation, the central unit of the apparatus comprising a stirred reactor (1) with integrated inclined clarifier (5), the inclined clarifier (5) comprising lamellae (3) installed parallel to its bottom surface, the inlet area of the inclined clarifier (5) being arranged on the stirred reactor (1) in such a way that the solid particles sedimented on the surface of the lamellae can slide back only into the stirred reactor (1), and the apparatus additionally having a pump (12) and a circulation vessel (13) so configured that the overflow from the inclined clarifier (5) is conveyed by the pump (12) into the circulation vessel (13), the circulation vessel (13) comprising a filter element (16) with take-off line for clear mother liquor, a free overflow (15) to the stirred reactor (1), and a take-off line for suspension with a further pump (23).

2. Apparatus according to Claim 1, **characterized in that** the angle of inclination of the inclined clarifier is from 20 to 85°.

3. Apparatus according to Claim 1 or 2, **characterized in that** the angle of inclination of the inclined clarifier is from 40 to 70°.

4. Apparatus according to any of Claims 1 to 3, **characterized in that** the inclined clarifier has a rail system for accommodating the lamellae which comprises at least one pair of rails and whose height can be adjusted on each side of its interior.

5. Apparatus according to any of Claims 1 to 3, **characterized in that** the inclined clarifier has a groove for accommodating lamellae on each side of its interior.

6. Apparatus according to Claim 1, **characterized in that** the lamellae are at least 0.5 cm thick.

7. Use of the apparatus according to any of the preceding claims for preparing compounds by precipitation.

8. Process for preparing compounds by precipitation in an apparatus according to Claim 1, which comprises the following steps:

- provision of at least one first starting solution and at least one second starting solution,
- combination of at least the first starting solution and the second starting solution in the stirred reactor (1),
- generation of a homogeneously mixed reaction zone in the stirred reactor (1),
- precipitation of the compounds in the reaction zone and production of a product suspension comprising insoluble product and mother liquor,
- partial separation of the mother liquor from the insoluble product by means of the inclined clarifier (5),
- setting of a fine particle fraction with a defined upper limit for the particle diameter in the overflow of the inclined clarifier (5) by partial removal of the overflow, with the fine particle fraction being optionally mixed back into the product suspension,
- production of a precipitation product suspension whose concentration is higher than the stoichiometric concentration,
- taking off of the product suspension from the stirred reactor (1),
- filtration and drying of the precipitation product.

9. Process according to Claim 8, **characterized in that** the partial removal of the mother liquor is effected by direct taking off of the overflow from the inclined clarifier.

10. Process according to Claim 9, **characterized in that** the overflow of the inclined clarifier has from 0 to 50% of the solids content of the product suspension.

11. Process according to Claim 10, **characterized in that** the overflow of the inclined clarifier has from 0 to 30% of the solids content of the product suspension.

12. Process according to Claim 11, **characterized in that** the overflow from the inclined clarifier has from 0 to 15% of the solids content of the product suspension.

13. Process according to any of Claims 8 to 12, **characterized in that** the maximum particle size in the overflow from the inclined clarifier is 30% of the $D_{50}$ of the particle size distribution.

14. Process according to Claim 8, **characterized in that** the concentration of the precipitation product in the suspension is a multiple of the stoichiometric amount.

15. Process according to Claim 8 or 9, **characterized in that** up to 90% of the mother liquor is separated off.

**Revendications**

1. Dispositif pour la préparation de composés par précipitation, le dispositif présentant un réacteur à agitation (1) avec un clarificateur à tôles inclinées intégré (5), le clarificateur à tôles inclinées (5) contenant des lamelles (3) montées de manière plan-parallèle par rapport à sa surface de fond, en tant qu'unité centrale, la surface d'entrée du clarificateur à tôles inclinées (5) étant disposée au niveau du réacteur à agitation (1) de telle sorte que les particules solides sédimentées à la surface des lamelles ne puissent revenir que dans le réacteur à agitation (1), et le dispositif présentant en outre une pompe (12) et un récipient de circulation (13), configuré de telle sorte que la surverse du clarificateur à tôles inclinées (5) soit refoulée par la pompe (12) dans le récipient de circulation (13), le récipient de circulation (13) contenant un élément filtrant (16) avec une conduite de prélèvement pour la lessive mère claire, une surverse (15) libre vers le réacteur à agitation (1) et une conduite de prélèvement pour le milieu trouble avec une pompe supplémentaire (23).

2. Dispositif selon la revendication 1, **caractérisé en ce que** l'angle d'inclinaison du clarificateur à tôles inclinées est de 20 à 85°.

3. Dispositif selon la revendication 1 ou 2, **caractérisé en ce que** l'angle d'inclinaison du clarificateur à tôles inclinées est de 40 à 70°.

4. Dispositif selon l'une quelconque des revendications 1 à 3, **caractérisé en ce que** le clarificateur à tôles inclinées présente, latéralement de chaque côté un système de rails réglable en hauteur pour recevoir les lamelles, constitué d'au moins une paire de rails.

5. Dispositif selon l'une quelconque des revendications 1 à 3, **caractérisé en ce que** le clarificateur à tôles inclinées présente à l'intérieur latéralement de chaque côté au moins une rainure pour recevoir les lamelles.

6. Dispositif selon la revendication 1, **caractérisé en ce que** les lamelles ont une épaisseur d'au moins 0,5 cm.

7. Utilisation du dispositif selon l'une quelconque des revendications précédentes pour la préparation de composés par précipitation.

8. Procédé pour la préparation de composés par précipitation dans un dispositif selon la revendication 1, constitué des étapes suivantes :

- mise à disposition d'au moins une première et d'une deuxième solution de départ,
- réunion d'au moins la première et la deuxième solution de départ dans le réacteur à agitation (1),
- génération d'une zone de réaction mélangée de manière homogène dans le réacteur à agitation (1),
- précipitation des composés dans la zone de réaction et génération d'une suspension de produit, constituée de produit insoluble et de lessive-mère,
- séparation partielle de la lessive-mère du produit insoluble via le clarificateur à tôles inclinées (5),
- ajustement d'une proportion de grains fins présentant une limite supérieure définie du diamètre de particule dans la surverse du clarificateur à tôles inclinées (5) par séparation partielle de la surverse, la proportion de grains fins étant éventuellement à nouveau mélangée à la suspension de produit,
- préparation d'une suspension de produit précipité dont la concentration en produit précipité est supérieure à la concentration stoechiométrique,
- prélèvement de la suspension de produit du réacteur à agitation (1),
- filtration et séchage du produit précipité.

9. Procédé selon la revendication 8, **caractérisé en ce que** la séparation partielle de la lessive-mère est réalisée par prélèvement direct de la surverse du clarificateur à tôles inclinées.

10. Procédé selon la revendication 9, **caractérisé en ce que** la surverse du clarificateur à tôles inclinées présente 0 à 50% de la teneur en solides de la suspension de produits.

11. Procédé selon la revendication 10, **caractérisé en ce que** la surverse du clarificateur à tôles inclinées présente 0 à 30% de la teneur en solides de la suspension de produits.

12. Procédé selon la revendication 11, **caractérisé en ce que** la surverse du clarificateur à tôles inclinées présente 0 à 15% de la teneur en solides de la suspension de produits.

13. Procédé selon l'une quelconque des revendications 8 à 12, **caractérisé en ce que** la grosseur maximale de particule dans la surverse du clarificateur à tôles inclinées représente 30% de la valeur $D_{50}$ de la répartition granulométrique.

14. Procédé selon la revendication 8, **caractérisé en ce que** la concentration en produit précipité dans la suspension représente un multiple de la quantité stoechiométrique.

15. Procédé selon la revendication 8 ou 9, **caractérisé en ce qu'**on sépare partiellement jusqu'à 90% de la lessive-mère.

Fig. 1

Fig. 2

Fig. 3

Fig. 4

Fig. 5

5

28

26

**Fig. 6**

5

26

27

**Fig. 7**

Fig. 8

**Fig. 9**

**Fig. 10**

**Fig. 11**

Fig. 12

21

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP HEI468249 A
- JP 4068249 A
- EP 0658514 B1
- US 4735872 A

- US 20030054252 A1
- US 2003005452 A
- US 5476530 A

**In der Beschreibung aufgeführte Nicht-Patentliteratur**

- *Z. Kristallogr.,* 2005, vol. 220, 306-315